# EUROPEAN PATENT APPLICATION

(11) **EP 1 527 816 A1**
(43) Date of publication of application: **04.05.2005**
(21) Application number: 03025160.7
(22) Date of filing: 03.11.2003
(51) Int. Cl.: B01J 19/24, F28D 9/00

(54) **High pressure pseudo-isothermal chemical reactor**

(71) Applicant: METHANOL CASALE S.A., 6900 Lugano-Besso (CH)
(72) Inventor: Filippi, Ermanno, 6976 Castagnola (CH); Rizzi, Enrico, 22070 Grandate (IT); Tarozzo, Mirco, 6853 Ligornetto (IT)
(74) Representative: Zardi, Marco

(57) **Abstract**

A pseudo-isothermal chemical reactor (1) comprises a plurality of boxed, plate-shaped heat exchangers (7) with a substantially flattened rectangular shape, formed from a pair of juxtaposed metallic plates (8,8a) spaced apart and joined perimetrically, defining an inner chamber and comprising spacer elements (12) intended to be crossed by a heat exchange operating fluid.

## Description

### Field of application

The present invention, in its most general aspect, refers to a pseudo-isothermal chemical reactor, operating at a high pressure and comprising a reaction space in which a plurality of heat exchangers of the so-called plated type are immersed.

In the following description and in the subsequent claims, with the terms "pseudo-isothermal reactor" we mean to identify that type of chemical reactor in which the reactions are carried out at a controlled temperature around as tight as possible a range of values around a predetermined optimal value.

With the terms "plated exchanger" we mean to identify a boxed, plate-shaped heat exchanger with a substantially flattened rectangular shape, formed by a pair of juxtaposed metallic plates, spaced apart and perimetrically joined, defining an inner chamber intended to be crossed by a heat exchange operating fluid.

### Prior art

To carry out a reaction in pseudo-isothermal conditions it is necessary to control the temperature within a predetermined range of values within a reaction space of the reactor in which said reaction is carried out.

For this reason it is necessary to remove heat when the reaction is exothermic and provide heat when the reaction is endothermic, respectively.

For this purpose, heat exchangers are used, immersed in the reaction space, internally crossed by an operating fluid responsible for the heat exchange, i.e. for the removal or supply of heat from/to the reaction zone.

Amongst the different types of heat exchangers, plated heat exchangers of the aforementioned type have found particular and advantageous use, since they allow the temperature in a pseudo-isothermal chemical reactor to be adequately controlled.

With regard to such exchangers a technical drawback has nevertheless been highlighted due above all to their flattened shape and consisting of a recognized low resistance to pressure, for which reason, during their possible use in high pressure reaction environments for example in urea synthesis, they may squashed and buckle.

Due to such deformations, the exchangers undergo a reduction in the passage section of the operating fluid inside of them.

Consequently, the operating heat exchange fluid is no longer able to cross the exchangers and exchange heat with the reaction zone, which, for this reason, no longer operates in pseudo-isothermal conditions, with a substantial decrease in the reaction yield.

### Summary of the invention

The technical problem underlying the present invention is that of providing a pseudo-isothermal chemical reactor equipped with heat exchangers of the so-called plated type immersed in a reaction zone, which are able to withstand high pressure differences between the reaction zone (at a high pressure) and the inside of the exchangers themselves (at a low pressure), without these exchangers undergoing deformations or squashing, thus overcoming the drawbacks of the prior art.

The aforementioned technical problem is solved by a pseudo-isothermal chemical reactor, comprising a plurality of boxed, plate-shaped heat exchangers with a substantially flattened rectangular shape, formed from a pair of juxtaposed metallic plates, spaced apart and joined perimetrically, defining an inner chamber intended to be crossed, along a predetermined direction, by a heat exchange operating fluid, characterized in that said heat exchangers comprise spacer elements structurally independent from said exchangers, placed between said metallic plates inside said inner chamber.

Further characteristics and advantages of the invention will become clearer from the detailed description of an embodiment of a chemical reactor according to the invention, given hereafter with reference to the attached drawings, for indicative and non-limiting purposes.

### Brief description of the drawings

- Figure 1 schematically shows a section view of a reactor according to the present invention.
- Figure 2 schematically shows a perspective view of a detail of figure 1.
- Figure 3 schematically shows a perspective view with separated parts of the detail of figure 2.
- Figure 4 schematically shows a section along the line IV-IV of figure 2.
- Figure 5 schematically shows a section along the line IV-IV of figure 2, according to a variant of the present invention.
- Figure 6 schematically shows a detail of the detail of figure 2 according to the variant of figure 5.

### Detailed description of a preferred embodiment of the invention

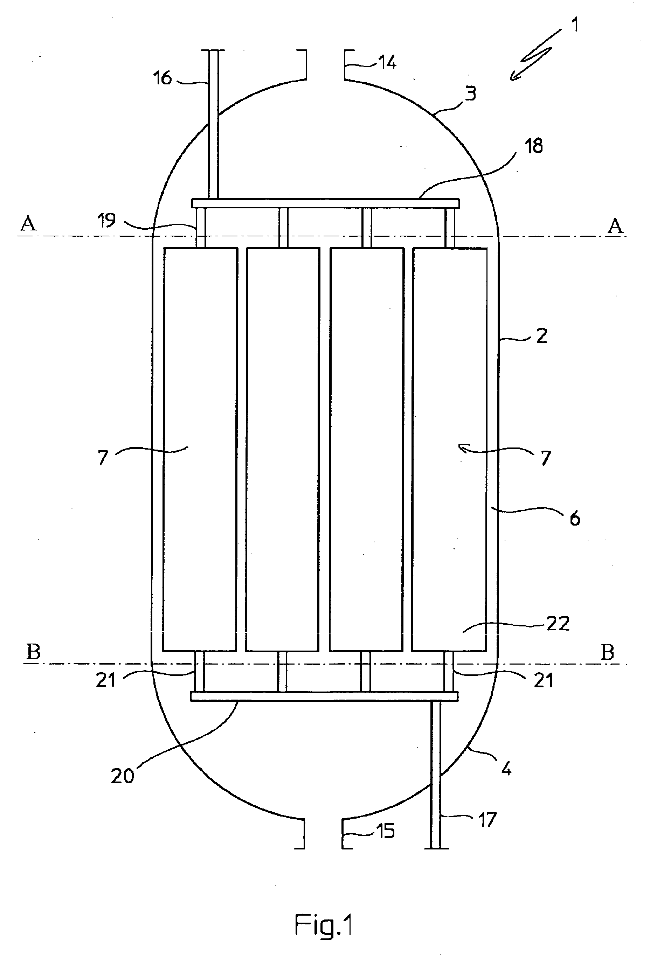

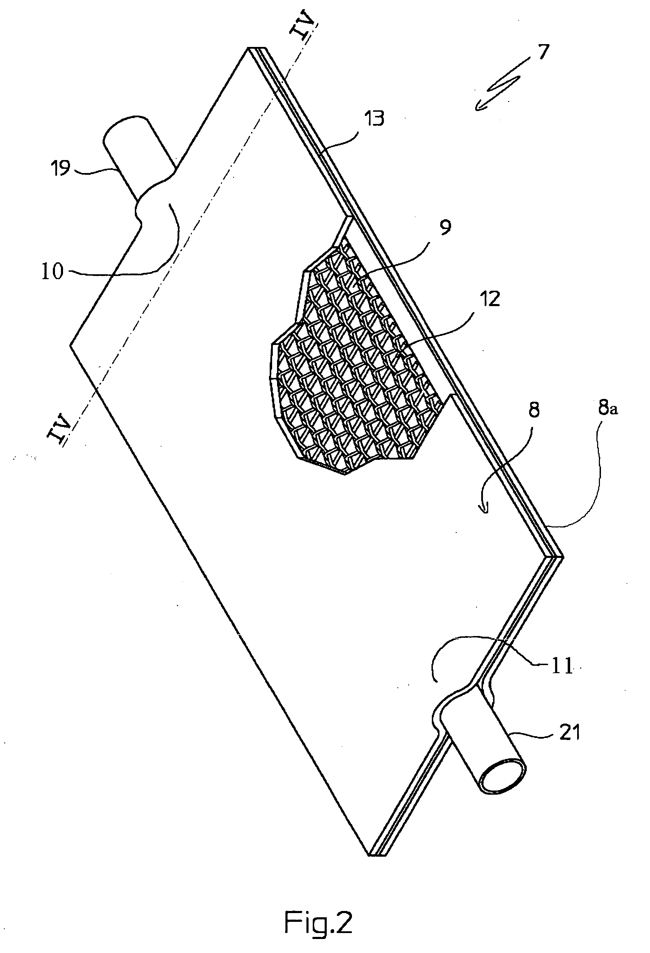

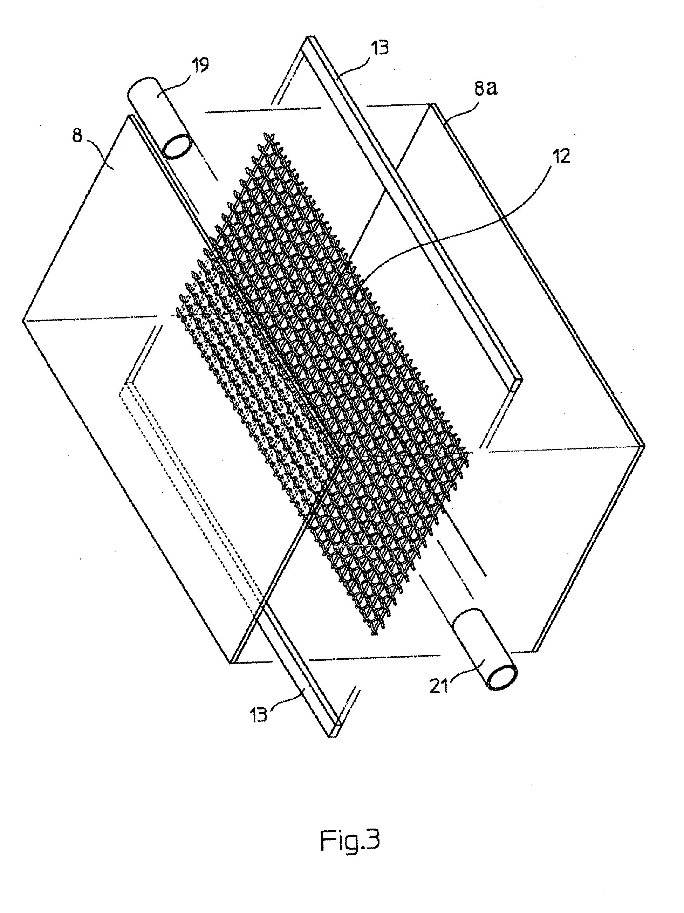

With reference to figures 1-6, a pseudo-isothermal chemical reactor according to the present invention is generally indicated with 1.

The reactor 1 comprises a substantially cylindrical shell 2, closed at the opposite ends by respective base plates, upper 3 and lower 4, a reaction space or zone 6, situated inside said shell 2 and representatively defined by the lines A-A and B-B in fig. 1.

The pseudo-isothermal chemical reactor comprises an upper opening 14 in fluid communication with the upper base plate 3 and a lower opening 15 in fluid communication with the lower base plate 4, respectively for the inlet of the reactants and the outlet of the reaction products.

In the reaction space 6 a plurality of boxed, plate-shaped heat exchangers 7 with a substantially flattened rectangular shape is immersed, each of which is formed from a pair of juxtaposed metallic plates 8, 8a, spaced apart and joined perimetrically through side elements 13 with which they are associated thanks to welding 22, to define an inner chamber 9, intended to be crossed, along a predetermined direction, by a heat exchange operating fluid.

Two openings 16 and 17 are also provided, respectively for feeding and discharging the heat exchange operating fluid to and from, respectively, the heat exchangers. For such a purpose, the reactor 1 is internally provided, above the exchangers 7, with a distributor duct 18, in fluid communication with the outside of the reactor 1 through the opening 16 and in fluid communication with the inside of the heat exchangers 7 through suitable junctions 19. In an analogous way, the reactor 1 comprises, in a position below the heat exchangers 7, a collector duct 20 in fluid communication with the inside of the exchangers 7, 21, and in communication with the outside of the reactor 1 through the opening 17.

The junctions 19 and 21 are in turn in fluid communication with the heat exchangers 7 through suitable openings 10, 11, respectively, for the entry and removal of said heat exchange operating fluid into/from said heat exchanger 7, respectively.

According to the present invention, each exchanger 7 advantageously comprises spacer elements 12, arranged inside each exchanger, placed between the metallic plates 8, 8a inside the chamber 9.

The aforementioned spacer elements 12 preferably but not restrictively consist of a metallic network, a stretched metallic plate, a grill or else a plate with fret or concertina profile with parallel folds.

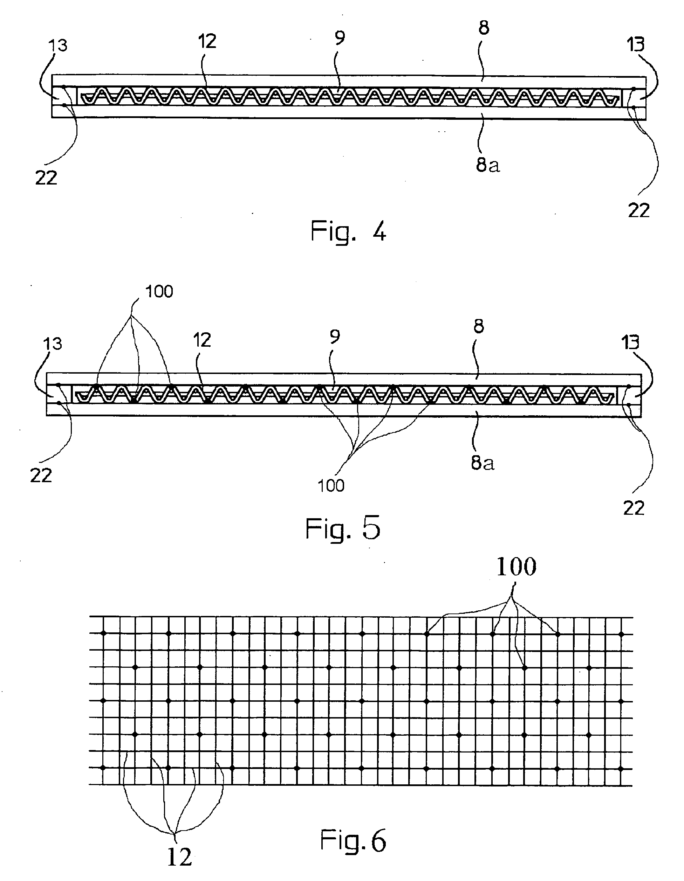

In particular, according to a first embodiment of the present invention represented in figure 4, the spacer elements 12 are preferably structurally independent with respect to the exchangers 7.

Said spacer elements 12 inserted inside the heat exchangers 7 realize a constraint bearing distributed on both of the metallic plates 8, 8a of the exchanger, thus making the plates 8, 8a suitable for bearing high external pressures.

In accordance with the present invention, a flow of reactants enters into the reactor 1 through the opening 14 and, inside the reaction zone 6, reacts to give a mixture of reactants and products which is subsequently discharged to the outside of the reactor 1 thanks to the opening 15. Inside the reaction zone 6, reactants and products exchange heat, by means of the heat exchangers 7, with heat exchange operating fluid, thus allowing conditions of pseudo-isothermicity to be maintained inside the reaction zone 6.

Thanks to the configuration described above, a pseudo-isothermal chemical reactor is obtained in which the heat exchangers are able to work in a reaction environment in which the pressure is much greater than that inside the exchangers themselves. Such exchangers neither squash nor buckle, and keep their heat exchange capacity unchanged even at high external pressures, thus solving the technical problem and overcoming the drawbacks of the prior art as described above.

The reactor, and in particular the exchanger 7 according to the present invention, is particularly suitable for being used for example in processes for urea production, where the pressure inside the reactor can reach 250 bar, whereas the operating pressure inside the exchangers is normally only 6 bar.

According to a further embodiment of the present invention, the spacer element 12, for example a metallic network, is advantageously welded to the plates 8, 8a of the heat exchanger 7 at predetermined welding points 100. In the example of figures 5-6, the welding points 100 are arranged with a quincunx pattern. Alternatively, the welding points 100 can even be distributed along the spacer element 12 with square or triangular pitch.

Thanks to the welding points 100, the spacer elements 12 carry out a further function of a "tie rod" of the metallic plates 8, 8a, and the heat exchangers 7 are thus able to endure, without deforming, also in conditions in which, for accidental and temporary causes, the internal pressure is greater than the external pressure of the reaction space 6. Such conditions may for example occur during the transitory periods of operation of the reactor (switching on or switching off), as well as due to malfunction thereof.

By increasing the number of welding points 100 and decreasing the pitch between one point and the next, the resistance to the inner pressure of the heat exchanger 7 is increased.

The invention thus conceived is susceptible to further variants and modifications all of which fall within the inventive concept and, as such, fall within the scope of protection of the invention itself, as defined by the following claims.

## Claims

1. Pseudo-isothermal chemical reactor (1), comprising a plurality of boxed, plate-shaped heat exchangers (7) with a substantially flattened rectangular shape, formed from a pair of juxtaposed metallic plates (8, 8a), spaced apart and joined perimetrically, defining an inner chamber (9) intended to be crossed, along a predetermined direction, by a heat exchange operating fluid, **characterized in that** said heat exchangers (7) comprise spacer elements (12) placed between said metallic plates (8, 8a) inside said chamber (9).

2. Chemical reactor according to claim 1, **characterized in that** said spacer elements (12) comprise a metallic network, stretched metallic plate, a grill or else a plate with fret or concertina profile with parallel folds.

3. Chemical reactor according to claim 1, **characterized in that** said spacer elements (12) are structurally independent from said exchangers (7).

4. Chemical reactor according to claim 1, **characterized in that** said spacer elements (12) are welded to the plates (8, 8a) of said heat exchangers (7) at predetermined welding points (100).

5. Chemical reactor according to claim 1, **characterized in that** said welding points (100) are arranged with a quincunx pattern.

6. Boxed, plate-shaped heat exchanger (7) with a substantially flattened rectangular shape, formed from a pair of juxtaposed metallic plates (8, 8a), spaced apart and joined perimetrically, defining an inner chamber (9) intended to be crossed, along a predetermined direction, by a heat exchange operating fluid, **characterized in that** said heat exchanger (7) comprises a spacer element (12) placed between said metallic plates (8, 8a) inside said chamber (9).

7. Heat exchanger (7) according to claim 6, **characterized in that** said spacer element (12) comprises a metallic network, stretched metallic plate, a grill or else a plate with fret or concertina profile with parallel folds.

8. Heat exchanger (7) according to claim 6, **characterized in that** said spacer element (12) is structurally independent from said heat exchanger (7).

9. Heat exchanger (7) according to claim 6, **characterized in that** said spacer element (12) is welded to the plates (8, 8a) of said heat exchanger (7) at predetermined welding points (100).

10. Heat exchanger (7) according to claim 9, **characterized in that** said welding points (100) are arranged with a quincunx pattern.
